# EUROPÄISCHE PATENTSCHRIFT

(11) **EP 1 456 808 B1**
(45) Veröffentlichungstag und Bekanntmachung des Hinweises auf die Patenterteilung: **22.06.2005**
(21) Anmeldenummer: 02805300.7
(22) Anmeldetag: 03.12.2002
(51) Int. Cl.: G06K 11/18, G06K 11/20, G06F 3/033, G06F 1/16

(54) **VORRICHTUNG ZUM ERFASSEN UND DARSTELLEN VON BEWEGUNGEN**
DEVICE FOR DETECTING AND DISPLAYING MOVEMENTS
DISPOSITIF DE DETECTION ET DE REPRESENTATION DE MOUVEMENTS

(30) Priorität: 21.12.2001 EP 01130738
(43) Veröffentlichungstag der Anmeldung: 15.09.2004
(73) Patentinhaber: Siemens Aktiengesellschaft, 80333 München (DE)
(72) Erfinder: ENGL, Walter, 83620 Feldkirchen-Westerham (DE); JARCZYK, Alexander, 85356 Freising (DE); SCHNEIDER-HUFSCHMIDT, Matthias, 80997 München (DE)
(86) Internationale Anmeldenummer: PCT/EP2002/013672
(87) Internationale Veröffentlichungsnummer: WO 2003/054781

(56) Entgegenhaltungen:
- EP-A- 0 957 448
- WO-A-01/03054
- WO-A-01/43473
- FR-A- 2 788 151
- US-A- 5 889 888

## Beschreibung

Die Erfindung betrifft eine Vorrichtung zum Erfassen und Darstellen von Bewegungen.

Derartige Vorrichtungen sind aus dem Stand der Technik bekannt. So wird heutzutage beispielsweise bei fast allen Computerdesktopanwendungen eine sogenannte Computermaus verwendet, mit welcher die auf einem externen Bildschirm dargestellte graphische Benutzeroberfläche eines Computers gesteuert werden kann. Solche Computermäuse besitzen zur Erfassung der Bewegung beispielsweise eine Kugel, welche in einer Vertiefung an der Unterseite der Maus eingelegt ist. Wird die Maus durch den Benutzer bewegt, so dreht sich die Kugel an der Unterseite und über in der Maus angebrachte Abrollsensoren wird die Bewegung an den Computer übertragen.

Andere Arten von Computermäusen haben statt der mechanischen Bewegungserfassung durch eine Kugel optische Sensoren. Bei diesen wird beispielsweise durch die Messung des am Untergrund, auf welchem die Maus bewegt wird, gestreuten oder reflektierten Lichts auf die Bewegung der Maus geschlossen, wobei die entsprechenden Daten über ein Kabel an einen Computer übermittelt werden.

Die Übertragung der Bewegungsdaten von der Computermaus zum Rechner erfolgt im allgemeinen über ein Kabel. Es sind aber auch Ausführungen bekannt, bei welchen die Bewegungsdaten drahtlos an einen Computer übertragen werden.

Die Verwendung einer grafischen Benutzeroberfläche, wie sie sich heute bei herkömmlichen Computeranwendungen durchgesetzt hat, bedingt im allgemeinen die Möglichkeit, beliebige Orte auf der Bildschirmanzeige frei erreichen zu können. Dies wird, wie erwähnt, bei den meisten Desktopanwendungen mit der sogenannten Maus erreicht. Bei portablen Geräten ist eine solche Lösung allerdings nicht gewünscht, da der Benutzer im allgemeinen keine gesonderten Bedienungsaccessoirs zu seinem Gerät mitführen will. Dieses Problem wird beispielsweise bei bekannten Personal Digital Assistants (PDAs) oder kleinen, sogenannten Hand Held Computern (Palmtops) durch einen Stift gelöst, welcher im Gerät aufbewahrt wird und bei Bedarf herausgenommen wird. Der Nachteil dieser Konstruktion ist, dass der Stift leicht verloren werden kann, da er z.B. aus seiner Halterung herausfällt oder während der Arbeit abgelegt wird und dann dort vergessen wird. Zudem benötigt man zur Bedienung des Geräts beide Hände, was in vielen Fällen, speziell bei mobilen Anwendungen, nicht gewünscht ist.

Eine weitere Möglichkeit, den aktiven Punkt einer grafischen Benutzeroberfläche zu bewegen, liegt darin, am Gerät dafür vorgesehene Tasten anzubringen und diese zu bedienen. Diese Lösung ist im allgemeinen sehr umständlich, da sehr viele Tastenbedienungen notwendig sind, um von einer Seite der Anzeige zu einer anderen zu kommen. Die Möglichkeit, den aktiven Punkt einer grafischen Benutzeroberfläche rasch an einen beliebigen Platz auf dem Bildschirm bewegen zu können, ist aber gerade Voraussetzung für die effiziente Benutzung einer solchen Oberfläche.

Als weitere Möglichkeit zur Eingabe von Daten gewinnt die Erfassung von Grafiken oder Handschriften zunehmend an Bedeutung. Bei fest installierten Computersystemen hat sich dabei ebenfalls die oben erwähnte Computermaus bewährt. Diese Möglichkeit wird von vielen herkömmlichen computergesteuerten Grafikanwendungen genutzt.

Bei den genannten mobilen Geräten, die, wie PDAs oder Palmtops, über einen gesondert beigefügten Stift gesteuert werden, ist die Erfassung von Zeichnungen und Handschrift ebenfalls möglich, aber mit dem oben bereits erwähnten Nachteil, beide Hände bei der Eingabe zu benötigen, und der Gefahr, den Stift zu verlieren, wonach das System bis zur Beschaffung eines Ersatzstiftes beinahe unbrauchbar wird.

Bei Geräten, bei welchen, wie oben erwähnt, die Steuerung über spezielle Tasten erfolgt, ist die Erfassung von Grafiken oder Handschriften praktisch unmöglich.

Aufgabe der vorliegenden Erfindung ist es daher, ein System zur Verfügung zu stellen, bei welchem graphische Daten oder zur Benutzung benötigte Daten über manuelle Bewegungen erfassbar sind, und welches sich zur einhändigen Bedienung eignet.

Diese Aufgabe wird gelöst durch eine Vorrichtung zum Erfassen und Darstellen von Bewegungen, welche umfasst: ein Gehäuse, an dem Gehäuse angebrachte Positionserfassungsmittel zum Erfassen der gegenwärtigen Positionsdaten eines Bezugspunktes der Vorrichtung, Datenverarbeitungsmittel zum Verarbeiten von mit den Positionserfassungsmitteln erfassten Positionsdaten, und eine an dem Gehäuse vorgesehene Anzeigeeinrichtung zur Darstellung eines Bildes von erfassten und verarbeiteten Positionsdaten, wobei die Datenverarbeitungsmittel mit einer Einrichtung zur Zeichenerkennung ausgebildet sind, welche die von den Positionserfassungsmitteln (172, 174) erfasste Änderung der gegenwärtigen Position des Bezugspunktes (14; 114) auf eine Übereinstimmung mit vorbestimmten Zeichen untersucht und dieser bei wesentlicher Übereinstimmung wenigstens ein Zeichen zuordnet.

Diese Vorrichtung ermöglicht erstmals die bewegungsinduzierte Erfassung von Daten bei gleichzeitiger Darstellung dieser Daten oder von diesen induzierten Aktionen auf der an der Vorrichtung befindlichen Anzeigeeinrichtung. Die Anzeigeeinrichtung kann dabei beispielsweise ein Flüssigkristall(LCD)-Display oder eine Elektrolumineszenz-Display (unter Verwendung von beispielsweise organischen oder anorganischen Halbleitern oder elektrolumineszierenden Farbstoffen) sein. Die Vorrichtung verbindet beispielsweise die bekannten Vorteile der erwähnten Computermaus bei der Eingabe von grafischen Daten, Handschrift, oder bei der Steuerung einer grafischen Benutzeroberfläche mit der Möglichkeit, ein entsprechendes Gerät nur mit einer Hand bedienen zu können.

Vor der Benutzung der erfindungsgemäßen Vorrichtung kann es erforderlich sein, dass diese erst durch Zufuhr elektrischer Energie, wie beispielsweise Einschalten einer Stromversorgung oder Einlegen einer Batterie, in einen aktiven, das heißt funktionsfähigen, Zustand gebracht werden muss. Bei der Beschreibung der erfindungsgemäßen Vorrichtung wird im Rahmen dieser Anmeldung davon ausgegangen, dass sich diese in einem solchen funktionsfähigen Zustand befindet.

Wird die Vorrichtung bewegt, werden die Positionsdaten der Orte, die der Bezugspunkt während der Bewegung durchläuft, von den Positionserfassungsmittlen, zum Beispiel nachfolgend noch näher bestimmten Sensoren aufgenommen und von den Datenverarbeitungsmitteln, wie z.B. einem oder mehreren Mikroprozessoren, einem Kleincomputer, oder einem PC, verarbeitet. Je nach Art der eingegebenen Daten können diese dann auf der am Gehäuse vorgesehenen Anzeigeeinrichtung beispielsweise als grafische Darstellung der Bewegung und/oder als Bewegung eines aktiven Bereiches der Benutzeroberfläche relativ zur Benutzeroberfläche dargestellt werden. Dabei wird unter dem "aktiven Bereich einer Benutzeroberfläche" der Bereich verstanden, mit welchem bestimmte Aktionen oder Aktivitäten der Benutzeroberfläche ausgelöst werden. Üblicherweise wird dieser Bereich beispielsweise durch einen Pfeil, eine zeigende Hand oder Ähnliches dargestellt.

Weiterhin ist vorgesehen, dass die Datenverarbeitungsmittel mit Mitteln zur Zeichenerkennung ausgebildet sind, welche die von den Positionserfassungsmitteln erfasste Änderung der gegenwärtigen Position des Bezugspunktes auf eine Übereinstimmung mit vorbestimmten Zeichen untersuchen und dieser bei wesentlicher Übereinstimmung wenigstens ein Zeichen zuordnen. Eine solche Zeichenerkennung ermöglicht besonders die Realisierung kleiner und handlicher zur Informationseingabe geeigneter Geräte, da auf eine relativ sperrige Tastatur verzichtet werden kann.

Bei einer Weiterbildung der Erfindung können die am Gehäuse angebrachten Positionserfassungsmittel einen optischen Sensor und/oder einen mechanischen und/oder einen Beschleunigungssensor umfassen. Da jeder dieser Sensoren spezifische Eigenschaften hat, kann es sinnvoll sein, diese Sensoren unter Umständen auch zu kombinieren. So kann zur Erfassung der translatorischen Bewegung des Bezugspunktes beispielsweise ein optischer Sensor verwendet werden.

Im Gegensatz zu festen Anzeigeeinrichtungen, wie z.B. einem Bildschirm, kann es für eine mit dem Gehäuse mitbewegte Anzeigeeinrichtung gemäß der vorliegenden Erfindung vorteilhaft sein, dass auch eine Rotation der Vorrichtung erfasst wird. So kann es beispielsweise gewünscht sein, dass die Orientierung der auf der Anzeigeeinrichtung dargestellten Information relativ zum Benutzer unverändert bleibt, auch wenn die Vorrichtung gedreht wird. Damit kann z.B. vermieden werden, dass der Benutzer beim Betrachten der Anzeige mit den Augen der Drehung folgen muss. Zur Erfassung einer rotatorischen Bewegung um eine sich durch den Bezugspunkt erstreckende Achse kann beispielsweise ebenfalls ein optischer Sensor verwendet werden.

Um sowohl die Translation als auch die Rotation der Vorrichtung zu erfassen, können z.B. zwei optische Sensoren am Gehäuse angebracht werden.

Natürlich kann zur Erfassung der Bewegung der Vorrichtung unter anderem auch einer oder mehrere der aus der Computermaus bekannten Rollsensoren verwendet werden. Diese haben aufgrund ihres vergleichsweise einfachen Aufbaus beispielsweise den Vorteil, kostengünstig zu sein.

Speziell beim mobilen Einsatz der Vorrichtung kann es vorkommen, dass keine geeignete Oberfläche zur Benutzung der mit optischen oder mechanischen Sensoren ausgeführten Vorrichtung verfügbar ist. Um diesem Problem Rechnung zu tragen, kann die Verwendung von einem oder mehreren Beschleunigungssensoren zur Erfassung der Bewegung des Bezugspunkts vorgesehen sein. Diese können beispielsweise als Drehwinkelbeschleunigungssensor oder als Longitudinalbeschleunigungssensor ausgebildet sein. Im Gegensatz zu den oben erwähnten optischen oder mechanischen Sensoren wird mit Beschleunigungssensoren nicht direkt die Lageveränderung des Bezugspunktes erfasst, sondern die Veränderung seines Bewegungszustandes. Das bedeutet, es wird erfasst, ob der Bezugspunkt beschleunigt oder abgebremst wird, oder ob er sich gleichförmig bewegt oder ruht. Aus der Veränderung des Bewegungszustandes des Bezugspunktes, lassen sich dann die jeweiligen Positionsdaten dieses Punktes ermitteln. Die dargestellte Ausführungsform hat den Vorteil, dass man losgelöst von einer festen Oberfläche, quasi "in die Luft" schreiben kann.

So können zur vollständigen Erfassung der Bewegung der Vorrichtung beispielsweise zwei Translationsbeschleunigungssensoren und ein Drehwinkelbeschleunigungssensor am Gehäuse vorgesehen sein.

Je nach Einsatzzweck der Vorrichtung kann auch eine Kombination aus einem der genannten mechanischen oder optischen Sensoren mit einem Drehwinkelbeschleunigungssensor vorteilhaft sein.

Soll mit der erfindungsgemässen Vorrichtung eine Zeichnung oder Handschrift aufgenommen werden, kann es notwendig sein, dem System mitzuteilen, wann die Bewegung der Vorrichtung dem Teil einer Grafik oder Schrift entspricht, und wann durch die Bewegung der Vorrichtung das "Malwerkzeug" nur von einem Ort auf der virtuellen Benutzeroberfläche zu einem anderen bewegt werden soll, ohne eine "Spur" zu hinterlassen. Dies kann beispielsweise durch ein Bedienungsmittel, wie eine Taste oder einen Knopf, erreicht werden, mit welchem die graphische Darstellung der Positionsdaten des Bezugspunktes auf der Anzeigeeinrichtung gestartet ("aktiviert") wird. Weiterhin kann die Vorrichtung in diesem Zusammenhang Bedienungsmittel umfassen, mit welchen die graphische Darstellung der Positionsdaten des Bezugspunktes auf der Anzeigeeinrichtung beendet wird. Bei den Bedienungsmitteln zum Starten und Beenden der Darstellung der Positionsdaten kann es sich beispielsweise auch um ein und denselben Knopf oder ein und dieselbe Taste handeln, welche zwei Bedienungszustände, zum Beispiel gedrückt und gelöst, aufweist.

In einer weiteren Ausführungsform können die Bedienungsmittel zum Starten und Stoppen der graphischen Darstellung der Positionsdaten auch Mittel zum Nachweis des mechanischen Kontaktes der Vorrichtung zu einer Oberfläche eines festen Gegenstandes umfassen. Dies kann z.B. ein Druck- oder Berührungssensor sein. Die Vorrichtung kann dann so ausgebildet sein, dass nur die bei bestehendem Kontakt zur Oberfläche bestimmten Positionsdaten des Bezugspunktes auf der Anzeigeeinrichtung grafisch dargestellt werden. Bei dieser Ausführungsform handelt es sich um ein intuitiv recht einfach bedienbares System, da es dem Aufsetzen und Abheben eines Stiftes beim Zeichnen oder Schreiben entspricht.

Bei der Bedienung der erfindungsgemässen Vorrichtung kann es sehr vorteilhaft sein, wenn die Datenverarbeitungsmittel eine Änderung der gegenwärtigen Position des Bezugspunktes derart berücksichtigen, dass das auf der Anzeigeeinrichtung dargestellte Bild relativ zu einer festen Bezugsfläche im wesentlichen orts- und/oder lagestabil bleibt. Dies führt dazu, dass das auf der Anzeigeeinrichtung dargestellte Bild relativ zum Benutzer im wesentlichen ortsfest bleibt, was eine verbesserte Ablesbarkeit bewirkt.

Vorteilhaft bei dieser Ausgestaltung der Erfindung ist zudem, dass auf diese Weise die Handhabung von virtuellen Benutzeroberflächen und/oder Grafiken, welche sich über den Rand des Anzeigeelementes hinaus ausdehnen, gegenüber herkömmlichen Systemen deutlich vereinfacht wird. So wird bei der dargestellten Ausführungsform das Anzeigeelement ähnlich einem "Fenster" über eine gegenüber dem Benutzer im wesentlichen ortsfixierte virtuelle Benutzeroberfläche geführt. Damit verbinden sich die Bedienung der Grafiken und/oder Benutzeroberfläche und die Darstellung von verschiedenen Bereichen der Grafiken und/oder Benutzeroberfläche in einer einzigen Bewegung. Bei herkömmlichen Systemen müssen nicht auf der Anzeigeeinrichtung dargestellte Grafiken und/oder Teile der Benutzeroberfläche erst durch sogenanntes "Scrollen" in den aktiven Anzeigebereich gebracht werden, bevor sie weiter bearbeitet werden können. Bei der Erfindung hingegen muss lediglich die Vorrichtung um einen gewünschten Betrag in eine gewünschte Richtung bewegt werden, um ein vom Benutzer aus dort liegenden Bereich der Benutzeroberfläche oder Grafik anzuzeigen.

Die genannte Bezugsfläche kann beispielsweise eine Ebene sein, die parallel zur Oberfläche der Anzeigeeinrichtung verläuft. Die Bezugsfläche kann auch eine Fläche sein, welche im wesentlichen parallel zur Oberfläche eines festen Gegenstandes verläuft. Die Orts- und/oder Lagestabilität des Bildes relativ zur Bezugsfläche kann beispielsweise dadurch erreicht werden, dass eine gedachte Projektion des Bildes auf die Bezugsfläche orts- und/oder lagestabil bleibt. Die gedachte Projektion kann dabei eine Parallelprojektion oder eine von einem relativ zur Anzeigeeinrichtung festen Punkt ausgehende Punktprojektion sein.

Erfindungsgemäß kann die Orts- und/oder Lagestabilität dadurch erreicht werden, dass die Datenverarbeitungsmittel das dargestellte Bild innerhalb der Anzeigeeinrichtung mit einer der Änderung der gegenwärtigen Position des Bezugspunkts entgegengesetzten Komplementärbewegung bewegen. Dies entspricht der oben bereits erwähnten intuitiven Vorstellung der Bewegung eines durch die Anzeigeeinrichtung verkörperten "Fensters" über einer ortsfest fixierten virtuellen Grafik und/oder virtuellen Benutzeroberfläche.

Bei der Bedienung des erfindungsgemässen Systems kann es notwendig sein, einerseits einen Überblick über grosse Bereiche der Grafik und/oder Benutzeroberfläche zu erhalten. Andererseits kann es erforderlich sein, detailliert kleine Bereiche der Grafik und/oder Benutzeroberfläche zu betrachten oder zu bearbeiten. Daher kann es vorteilhaft sein, dass die erfindungsgemässe Vorrichtung weiterhin Bedienungsmittel umfasst, mit welchen das Grössenverhältnis zwischen den erfassten Positionsdaten und dem auf der Anzeigeeinrichtung dargestellten Bild der Positionsdaten einstellbar ist. Damit kann man z.B. in eine Grafik "hineinzoomen", um Details zu bearbeiten oder wieder "herauszoomen", um einen Gesamtüberblick zu erhalten.

Anhand dieses "Zoomens" lässt sich auch der Hintergrund der oben erwähnten Punktprojektion zum Erhalt der Orts- und/oder Lagestabilität des auf der Anzeigeeinrichtung dargestellten Gegenstands besser erläutern. Eine Punktprojektion geht von einem im Raum beliebig wählbaren Referenzpunkt aus. Geht man dann beispielsweise von einem auf einer bestimmten Bezugsfläche orts- und lagestabilen Bild eines Gegenstands aus, so erhält man beispielsweise die Darstellung von dessen Umrissen auf der Anzeigeeinrichtung durch Bestimmung der Schnittpunkte der Verbindungsgeraden zwischen den Umrissen des Bilds des Gegenstands auf der Bezugsfläche mit dem Referenzpunkt der Punktprojektion. Befindet sich die Ebene der Anzeigeeinrichtung zwischen der Bezugsfläche und dem Referenzpunkt, so ist die Darstellung eines Gegenstands auf der Anzeigeeinrichtung kleiner als dessen Bild auf der Bezugsfläche. Befindet sich die Bezugsfläche zwischen der Ebene der Anzeigeeinrichtung und dem Referenzpunkt, so ist die Darstellung des Gegenstands auf der Anzeigeeinrichtung im Vergleich zu seinem Bild auf der Bezugsfläche vergrößert.

Bei Verwendung einer Punktprojektion zum Erreichen der Orts- und Lagestabilität relativ zu einer Bezugsfläche kann das "Zoomen" beispielsweise durch Verändern der Lage des Referenzpunktes und daraus folgend einer anderen "Berechnung" des auf der Anzeigeeinrichtung dargestellten Bildes erreicht werden. Dies kann zum Beispiel mit dem erwähnten Bedienungsmittel geschehen. Eine andere Möglichkeit des "Zoomens" ist in diesem Fall durch die Veränderung des Abstands der Anzeigeeinrichtung von der Bezugsfläche gegeben.

Bei Verwendung einer Parallelprojektion zum Erreichen der Orts- und Lagestabilität relativ zu einer Bezugsfläche kann das "Zoomen" einfach durch Verwendung eines einstellbaren Skalierungsfaktors bei der Berechnung des auf der Anzeigeeinrichtung dargestellten Bildes erreicht werden. Dieser Skalierungsfaktor kann dann beispielsweise mit dem erwähnten Bedienungsmittel eingestellt werden.

Um eine möglichst einfache Eingabemöglichkeit für Schriftzeichen zu erhalten, kann erfindungsgemäß weiterhin vorgesehen sein, dass die Datenverarbeitungsmittel mit Mitteln zur Zeichenerkennung ausgebildet sind, welche die von den Positionserfassungsmitteln erfasste Änderung der gegenwärtigen Position des Bezugspunktes auf eine Übereinstimmung mit vorbestimmten Zeichen untersuchen und dieser bei wesentlicher Übereinstimmung wenigstens ein Zeichen zuordnen. Eine solche Zeichenerkennung ermöglicht besonders die Realisierung kleiner und handlicher zur Informationseingabe geeigneter Geräte, da auf eine relativ sperrige Tastatur verzichtet werden kann.

Speziell für mobile Anwendungen der erfindungsgemässen Vorrichtung ist es vorteilhaft, wenn die Datenverarbeitungseinrichtung zur kabelgebundenen oder kabellosen Kommunikation mit einer entfernt angeordneten Basis ausgebildet ist. Auf diese Weise kann die Vorrichtung beispielsweise mit einem anderen Computer oder einem Drucker verbunden werden oder z.B. an ein Mobilfunknetz gekoppelt werden. Im letzteren Fall kann die Datenverarbeitungseinrichtung beispielsweise Funkübertragungsmittel aufweisen, die sich zur Übertragung von erfassten Bewegungen und/oder ermittelten Zeichen eignet. Auf diese Weise könnten z.B. mit der erfindungsgemässen Vorrichtung Nachrichten erfasst werden, welche dann mittels der Funkübertragungsmittel beispielsweise über ein Mobilfunknetz weitergeleitet werden können.

Da es insbesondere bei mobilen Telekommunikationsendgeräten gewünscht ist, die bisher eher ungenügenden Möglichkeiten der graphischen Benutzerführung zu verbessern, kann es besonders vorteilhaft sein, wenn die erfindungsgemässe Vorrichtung als mobiles Telekommunikationsendgerät ausgebildet ist. Damit liessen sich die gesamten, im Vorhergehenden genannten Vorteile der Erzeugung von Grafiken und Verwendung von grafischen Benutzeroberflächen in einem Telekommunikationsendgerät vereinen, was dessen Benutzerfreundlichkeit und Anwendungsspektrum erheblich erhöhen würde.

Wie vorstehend bereits angedeutet, ist es wünschenswert, zur Steuerung der erfindungsgemässen Vorrichtung ein Verfahren zu verwenden, bei welchem auf der Anzeigeeinrichtung eine grafische Benutzeroberfläche dargestellt wird, welche durch Bewegung der Vorrichtung bedient wird. Dabei kann in einer Weiterbildung der Erfindung vorgesehen sein, dass zumindest ein Teil der grafischen Benutzeroberfläche aus der Darstellung einer Tastatur besteht. Durch Bewegung des Gehäuses werden dann zur Eingabe von Schrift einzelne Zeichen "angesteuert" und ausgewählt. Die Auswahl kann beispielsweise durch Drücken einer speziellen Auswahltaste oder Betätigen eines Druck- bzw. Berührungssensors erreicht werden, wie sie in Bezug auf die Erfassung von Grafiken bereits erwähnt wurden. Auf diese Weise können, alternativ zur oben erwähnten Schrifterkennung, einfach Texte und Zeichen eingegeben werden.

Speziell bei einer Kombination der erfindungsgemässen Vorrichtung mit einem Telekommunikationsendgerät kann es vorteilhaft sein, wenn die Darstellung der Tastatur auf der Benutzeroberfläche eine Telefontastatur umfasst. Auf diese Weise könnte beispielsweise ein mobiles Telekommunikationsendgerät realisiert werden, welches ohne mechanische Tastatur auskommt, und welches daher bei konstanter Baugrösse ein erheblich grösseres Display zur Darstellung von Grafiken und Daten besitzt.

Weiterhin kann zur Bedienung der erfindungsgemässen Vorrichtung vorgesehen sein, ein Verfahren zu verwenden, bei welchem die grafische Benutzeroberfläche die Steuerung einer Anordnung ermöglicht, durch welche Objekte in Form von Aktionen und Inhalten verarbeitbar sind, wobei die Aktionen ausführbar und die Inhalte durch die Aktionen bearbeitbar sind. Bei diesem Verfahren sind die Objekte in einem Bedienraum räumlich angeordnet und werden in eine Aneinanderreihung aufgenommen, wozu ihre jeweilige Position im Bedienraum aufgesucht wird. Beispielsweise kann eine Vorrichtung, wie sie beispielhaft im vorstehenden Text beschrieben ist, zur Steuerung einer auf der Anzeigeeinrichtung (12, 112) dargestellten grafischen Benutzeroberfläche verwendet werden, wobei die grafische Benutzeroberfläche durch Bewegung der Vorrichtung bedient wird.

Weitere Ausführungsformen der Erfindung sind in den Unteransprüchen enthalten.

Die Erfindung wird im Folgenden anhand der beiliegenden Figuren beispielhaft erläutert. Es stellen dar:
- Fig. 1: eine Draufsicht eines ersten Ausführungsbeispiels der erfindungsgemässen Vorrichtung;
- Fig. 2: eine Draufsicht eines zweiten Ausführungsbeispiels der erfindungsgemässen Vorrichtung;
- Fig. 3: eine perspektivische Ansicht des zweiten Ausführungsbeispiels der erfindungsgemässen Vorrichtung, wobei anhand einer dargestellten Hand eine Bedienungsmöglichkeit gezeigt ist.

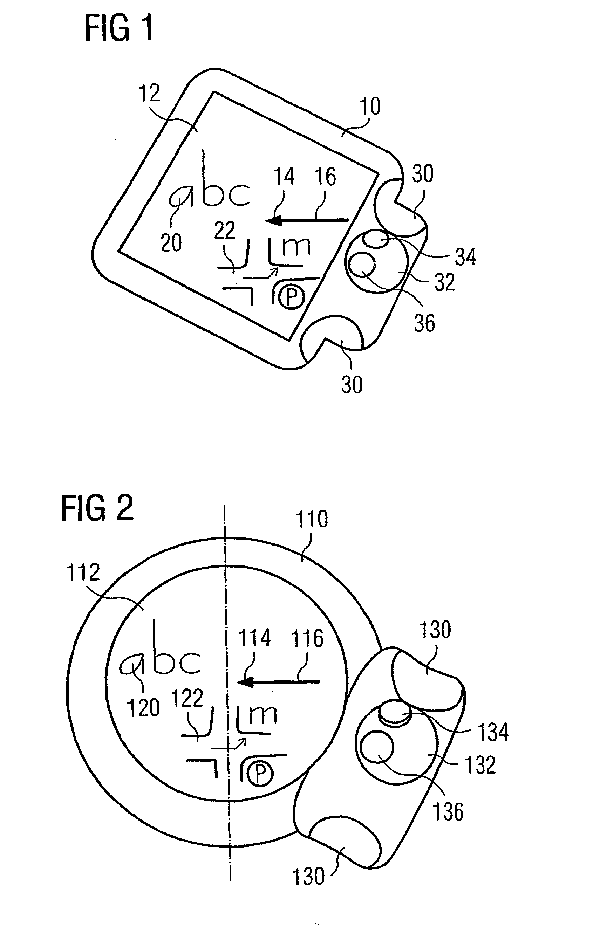

Figur 1 stellt eine erste beispielhafte Ausführungsform der erfindungsgemässen Vorrichtung dar. Diese besteht aus einem annähernd quadratischen Gehäuse 10, auf welchem sich eine annähernd quadratische Anzeigeeinrichtung 12 befindet. Auf dieser Anzeigeeinrichtung ist ein Bezugspunkt 14 der Vorrichtung dargestellt, welcher durch die Spitze eines Pfeilsymbols 16 symbolisiert wird. Beispielhaft zeigt die Anzeigeeinrichtung 12 weiterhin mittels der Vorrichtung aufgenommene Schriftzeichen "abc" 20 bzw. eine mit der erfindungsgemässen Vorrichtung aufgenommene Zeichnung 22.

Das Gehäuse 10 besitzt zwei Griffmulden 30, an welchen es mit zwei Fingern gehalten werden kann. Zwischen den Griffmulden 30 befindet sich ein erstes Bedienungselement 32, auf welchem wiederum zwei weitere, tastenförmige Bedienungselemente 34, 36 angeordnet sind. Diese Bedienungselemente 34, 36 sind Funktionstasten, mit welchen sich bestimmte Aktionen in der erfindungsgemässen Vorrichtung auslösen lassen, zum Beispiel entsprechend der bekannten Maustasten, welche sich auf einer Computermaus zur Bedienung einer herkömmlichen graphischen Benutzeroberfläche befinden.

In der dargestellten Ausführungsform ist das Bedienungselement 32 ist ortsfest und nur aus ergonomischen Gründen vorgesehen. Ein eventuell einzustellender Zoomfaktor kann durch einen beispielsweise an der Seite des Gehäuses befindlichen, in Figur 1 nicht dargestellten Drehknopf eingestellt werden. Das Bedienungselement 32 kann alternativ allerdings auch drehbar sein, um damit das Größenverhältnis zwischen den auf der Anzeigeeinrichtung dargestellten Positionsdaten und den real aufgenommenen Positionsdaten einzustellen ("Zooming").

Bei einer Bewegung des Gehäuses 10 bleibt der Bezugspunkt 14 und dementsprechend der Pfeil 16 ortsfest auf der Anzeigeeinrichtung und die im oder am Gerät befindlichen, in Figur 1 nicht dargestellten Positionssensoren messen die Veränderung der Position. Entsprechend der aufgenommenen Bewegung und einem unter Umständen eingestellten Zoomfaktor wird die auf der Anzeigeeinrichtung 12 dargestellte Grafik 20, 22 in entsprechend entgegengesetzter Richtung verschoben. Dadurch lässt sich der Pfeil 16 und damit der Bezugspunkt 14 beispielsweise über die Schrift oder über die Zeichnung oder an einem beliebigen anderen Punkt der Benutzeroberfläche bewegen.

Soll eine Zeichnung aufgenommen werden, so kann nach dem oben beschriebenen Verfahren der Bezugspunkt an eine gewünschte Stelle gebracht werden. Um die Aufnahme der Grafik zu starten, wird das Bedienungselement 34 gedrückt, und bei gedrücktem Bedienungselement 34 das Gehäuse wie gewünscht bewegt, wobei eine der Bewegung entsprechende Linie auf der Anzeigeeinrichtung angezeigt wird. Soll die Zeichnung der Linie beendet werden, wird das Bedienungselement 34 wieder losgelassen und der Bezugspunkt an einen neuen Punkt bewegt. Auf diese Weise lassen' sich beliebige Zeichnungen oder Buchstaben aufnehmen und darstellen.

Auf die gleiche Weise lässt sich auch die unter Umständen auf dem Anzeigeelement dargestellte virtuelle Benutzeroberfläche bedienen. Nachdem man den Bezugspunkt 14 über ein bestimmtes Element der Benutzeroberfläche gebracht hat, wird mittels einer der Tasten 34 oder 36 eine gewünschte Aktion ausgelöst.

Figur 2 stellt ein dem in Figur 1 dargestellten ersten Ausführungsbeispiel ähnliches zweites Ausführungsbeispiel dar, wobei der wesentliche Unterschied in der runden Bauform des Gehäuses und der runden Bauform der Anzeigeeinrichtung 114 liegt. Es werden der Figur 1 entsprechende Bezugszeichen vergeben, wobei bei den Bezugszeichen in Figur 2 jeweils eine 1 vor das entsprechende Bezugszeichen aus Figur 1 gesetzt wurde.

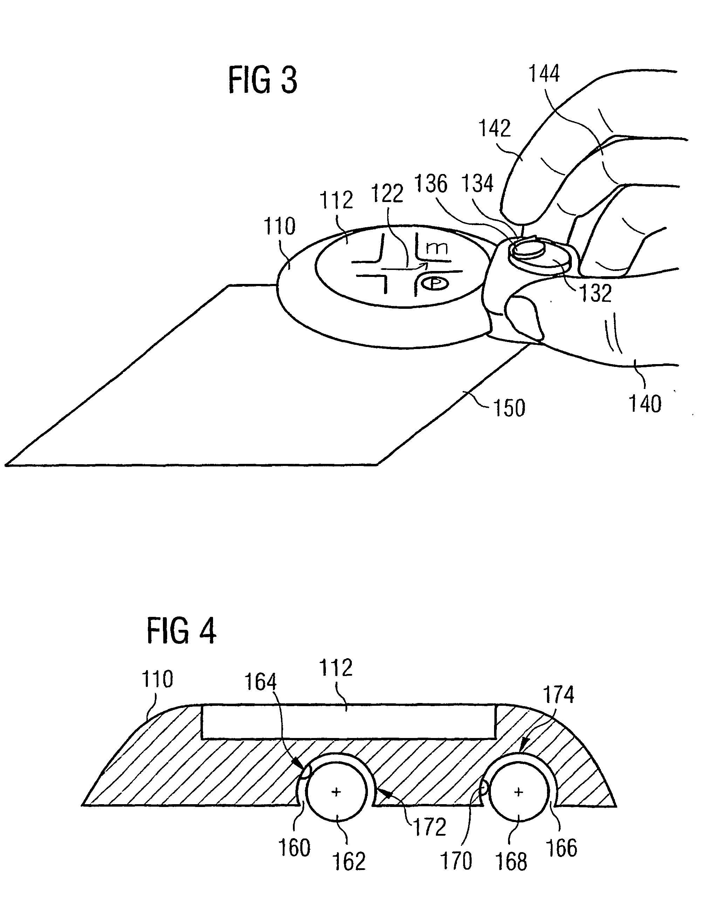

In Figur 3 wird das in Figur 2 dargestellte zweite Ausführungsbeispiel in perspektivischer Ansicht und während der Bedienung gezeigt. Weiterhin zeigt Figur 3, wie die Vorrichtung mittels Daumen 140 und Mittelfinger 144 einer Hand gehalten wird, die diese jeweils in einer der Griffmulden 130 greifen. Mit dem Zeigefinger 142 können dann die Bedienungselemente 132, 134 und 136 bedient werden. Weiterhin stellt Figur 3 die Oberfläche 150 eines festen Gegenstandes, wie z.B. eines Tisches, dar.

Durch im Gehäuse 110 angebrachte mechanische oder optische Bewegungssensoren, die in Figur 3 nicht dargestellt sind, kann die Bewegung des Gehäuses 110 relativ zu der Oberfläche 150 erfasst werden. Die Bedienung der in Figur 3 dargestellten Vorrichtung entspricht der Bedienung der beispielhaft in Figur 1 dargestellten Vorrichtung.

Figur 4 stellt einen Querschnitt des in Figur 2 dargestellten zweiten Ausführungsbeispiels entlang der in Figur 2 dargestellten strichpunktierten Linie dar. Insbesondere werden zwei Rollsensoren 172, 174 zur Aufnahme der Bewegung des Gehäuses 110 gezeigt. Die Anzeigeeinrichtung 112 ist an der Oberseite des Gehäuses 110 vorgesehen. Die zwei Rollsensoren 172, 174 bestehen aus annähernd kugelförmigen Öffnungen 160, 166 an der Unterseite des Gehäuses 110. Darin sind jeweils eine frei drehbare Kugel 162, 168 angeordnet, deren Rollbewegung von im allgemeinen jeweils zwei am Gehäuse angebrachten Sensorelementen 164, 170 aufgenommen werden, von welchen in Figur 4 aber jeweils nur einer 164, 170 dargestellt ist.

Befinden sich der Bezugspunkt und der erste Rollsensor 172 beispielsweise in der Mitte des Gehäuses, so entspricht die mit dem ersten Rollsensor 172 aufgenommenen Bewegung der Bewegung des Bezugspunkts, während die Differenz der Bewegungen des zweiten Rollsensors 174 und der Bewegung des ersten Rollsensors 172 der Rotation des Gehäuses entspricht.

### Bezugszeichenliste

- 10: Gehäuse
- 12: Anzeigeeinrichtung
- 14: Bezugspunkt
- 16: Pfeil zum Bezugspunkt
- 20: dargestellte Schrift
- 22: dargestellte Grafik
- 30: Griffmulden
- 32: Bedienungselement 1
- 34: Bedienungselement 2
- 36: Bedienungselement 3
- 110: Gehäuse
- 112: Anzeigeeinrichtung
- 114: Bezugspunkt
- 116: Pfeil zum Bezugspunkt
- 120: dargestellte Schrift
- 122: dargestellte Grafik
- 130: Griffmulden
- 132: Bedienungselement 1
- 134: Bedienungselement 2
- 136: Bedienungselement 3
- 140: Daumen
- 142: Zeigefinger
- 144: Mittelfinger
- 150: Oberfläche eines festen Gegenstands
- 160: Öffnung des ersten Rollsensors
- 162: Kugel des ersten Rollsensors
- 164: Sensorelement des ersten Rollsensors
- 166: Öffnung des zweiten Rollsensors
- 168: Kugel des zweiten Rollsensors
- 170: Sensorelement des zweiten Rollsensors
- 172: erster Rollsensor
- 174: zweiter Rollsensor

## Patentansprüche

1. Vorrichtung zum Erfassen und Darstellen von Bewegungen, umfassend:
- ein Gehäuse (10; 110),
- an dem Gehäuse angebrachte Positionserfassungsmittel (172, 174) zum Erfassen der gegenwärtigen Positionsdaten eines Bezugspunkts (14; 114) der Vorrichtung,
- Datenverarbeitungsmittel zum Verarbeiten von mit den Positionserfassungsmitteln (172, 174) erfassten Positionsdaten, und
- eine an dem Gehäuse (10; 110) vorgesehene Anzeigeeinrichtung (12; 112) zur Darstellung eines Bildes (20, 22; 120, 122) von erfassten und verarbeiteten Positionsdaten
**dadurch gekennzeichnet,**
**dass** die Datenverarbeitungsmittel mit einer Einrichtung zur Zeichenerkennung ausgebildet sind, welche die von den Positionserfassungsmitteln (172, 174) erfasste Änderung der gegenwärtigen Position des Bezugspunktes (14; 114) auf eine Übereinstimmung mit vorbestimmten Zeichen untersucht und dieser bei wesentlicher Übereinstimmung wenigstens ein Zeichen zuordnet.

2. Vorrichtung nach Anspruch 1,
wobei die Positionserfassungsmittel (172, 174) mit wenigstens einem optischen Sensor oder/und mit wenigstens einem mechanischen Sensor (172, 174) oder/und mit wenigstens einem Beschleunigungssensor, oder/und mit einer Kombination dieser Sensoren ausgeführt sind.

3. Vorrichtung nach Anspruch 2,
wobei der wenigstens eine optische Sensor als optischer Bewegungssensor zur Erfassung einer translatorischen Bewegung des Bezugspunktes (14; 114) ausgeführt ist.

4. Vorrichtung nach Anspruch 2 oder 3,
wobei der wenigstens eine optische Sensor zur Erfassung einer rotatorischen Bewegung um eine sich durch den Bezugspunkt (14; 114) erstreckende Achse ausgeführt ist.

5. Vorrichtung nach einem der Ansprüche 2 bis 4,
wobei die Vorrichtung zwei optische Sensoren umfasst.

6. Vorrichtung nach einem der Ansprüche 2 bis 5,
wobei der wenigstens eine mechanische Sensor als Rollsensor (172, 174) zur Erfassung einer Abrollbewegung auf einer Oberfläche (150) ausgeführt ist.

7. Vorrichtung nach einem der Ansprüche 2 bis 6,
wobei der wenigstens eine Beschleunigungssensor als Drehwinkel-Beschleunigungssensor oder als Longitudinal-Beschleunigungssensor zur Erfassung einer Beschleunigung des Bezugspunktes (14; 114) der Vorrichtung ausgeführt ist.

8. Vorrichtung nach einem der Ansprüche 2 bis 7,
wobei die Vorrichtung zwei Translationsbeschleunigungssensoren und einen Drehwinkelbeschleunigungssensor umfasst.

9. Vorrichtung nach einem der Ansprüche 2 bis 8,
wobei die Vorrichtung einen mechanischen oder einen optischen Sensor umfasst und weiterhin einen Drehwinkelbeschleunigungssensor umfasst.

10. Vorrichtung nach einem der vorhergehenden Ansprüche,
wobei die Vorrichtung Bedienungsmittel (34, 36; 134, 136) umfasst, mit welchen die grafische Darstellung der Positionsdaten des Bezugspunkts (14; 114) auf der Anzeigeeinrichtung (12; 112) gestartet wird und wobei die Vorrichtung weiterhin Bedienungsmittel (34, 36; 134, 136) umfasst, mit welchen die grafische Darstellung der Positionsdaten des Bezugspunktes (14; 114) auf der Anzeigeeinrichtung (12; 112) beendet wird.

11. Vorrichtung nach einem der vorhergehenden Ansprüche,
wobei die Vorrichtung Mittel zum Nachweis des Kontaktes zur Oberfläche eines festen Gegenstandes umfasst und wobei weiterhin die Datenverarbeitungsmittel die bei bestehendem Kontakt zur Oberfläche (150) eines festen Gegenstandes bestimmten Positionsdaten des Bezugspunktes (14; 114) auf der Anzeigeeinrichtung (12; 112) grafisch darstellen.

12. Vorrichtung nach einem der vorhergehenden Ansprüche,
wobei die Datenverarbeitungsmittel eine Änderung der gegenwärtigen Position des Bezugspunktes (14; 114) derart berücksichtigen, dass das auf der Anzeigeeinrichtung (12; 112) dargestellte Bild (20, 22; 120, 122) relativ zu einer festen Bezugsfläche im Wesentlichen orts- und/oder lagestabil bleibt.

13. Vorrichtung nach Anspruch 12,
wobei die Bezugsfläche eine zur Oberfläche der Anzeigeeinrichtung (12; 112) im Wesentlichen parallele Ebene ist.

14. Vorrichtung nach Anspruch 12,
wobei die Bezugsfläche im Wesentlichen parallel zur Oberfläche (150) eines festen Gegenstandes verläuft.

15. Vorrichtung nach einem der vorangehenden Ansprüche,
wobei die Datenverarbeitungsmittel zum Erreichen der Orts- und Lagestabilität des auf der Anzeigeeinrichtung (12; 112) dargestellten Bildes relativ zu der Bezugsfläche, das dargestellte Bild innerhalb der Anzeigeeinrichtung (12; 112) mit einer der Änderung der gegenwärtigen Position des Bezugspunktes (14; 114) entgegengesetzten Komplementärbewegung bewegen.

16. Vorrichtung nach einem der vorhergehenden Ansprüche,
wobei die Vorrichtung Bedienungsmittel (32; 132) umfasst, mit welchen das Grössenverhältnis zwischen den erfassten Positionsdaten und des auf der Anzeigeeinrichtung (12; 112) dargestellten Bildes (20, 22; 120, 122) der Positionsdaten einstellbar ist.

17. Vorrichtung nach einem der vorangehenden Ansprüche,
wobei die Datenverarbeitungsmittel einen Mikroprozessor umfassen.

18. Vorrichtung nach einem der vorangehenden Ansprüche,
wobei diese zur kabelgebundenen oder kabellosen Kommunikation mit einer entfernt angeordneten Basis ausgebildet ist.

19. Vorrichtung nach Anspruch 18,
wobei diese Funkübertragungsmittel aufweist, insbesondere zur Übertragung der erfassten Bewegung oder/und der ermittelten Zeichen.

20. Vorrichtung nach einem der vorhergehenden Ansprüche,
wobei diese als mobiles Telekommunikationsendgerät ausgebildet ist.

21. Verwendung einer Vorrichtung nach einem der vorhergehenden Ansprüche zur Steuerung einer auf der Anzeigeeinrichtung (12, 112) dargestellten grafischen Benutzeroberfläche, wobei wobei die grafische Benutzeroberfäche durch Bewegung der Vorrichtung bedient wird.

22. Verfahren nach Anspruch 21,
wobei die grafische Benutzeroberfläche die Darstellung einer Tastatur umfasst.

23. Verfahren nach Anspruch 22,
wobei die Tastatur eine Telefontastatur umfasst.

24. Verfahren nach einem der Ansprüche 21 bis 23,
wobei die graphische Benutzeroberfläche die Steuerung einer Anordnung ermöglicht, wobei weiterhin durch die Anordnung Objekte in Form von Aktionen und Inhalten verarbeitbar sind, indem die Aktionen ausführbar und die Inhalte durch die Aktionen bearbeitbar sind,
- bei dem die Objekte in einem Bedienraum räumlich angeordnet sind und
- bei dem die Objekte in eine Aneinanderreihung aufgenommen werden, wozu ihre jeweilige Position im Bedienraum aufgesucht wird.

## Claims

1. Device for detecting and displaying movements which comprises:
- a housing (10; 110),
- position detection means (172, 174) attached to the housing for detecting the present position data of a reference point (14; 114) of the device,
- data processing means for processing position data detected by means of the position detection means (172, 174), and
- a display facility (12; 112) provided on the housing (10; 110) for displaying an image (20, 22; 120, 122) of detected and processed position data.
**characterised in that**
the data processing means are embodied having a character recognition facility which scrutinises the change, detected by the position detection means (172, 174), in the present position of the reference point (14; 114) for agreement with pre-specified characters and which, in the event of substantial agreement, assigns at least one character to said position.

2. Device according to Claim 1
wherein the position detection means (172, 174) are embodied having at least one optical sensor or/and having at least one mechanical sensor (172, 174) or/and having at least one acceleration sensor, or/and having a combination of said sensors.

3. Device according to Claim 2
wherein the at least one optical sensor is embodied as an optical movement sensor for detecting a translational movement of the reference point (14; 114).

4. Device according to Claim 2 or 3
wherein the at least one optical sensor is embodied for detecting a rotational movement around an axis extending through the reference point (14; 114).

5. Device according to one of the Claims 2 to 4
wherein the device includes two optical sensors.

6. Device according to one of the Claims 2 to 5
wherein the at least one mechanical sensor is embodied as a ball sensor (172, 174) for detecting a rolling movement on a surface (150).

7. Device according to one of the Claims 2 to 6
wherein the at least one acceleration sensor is embodied as a rotation-angle acceleration sensor or as a longitudinal acceleration sensor for detecting an acceleration of the reference point (14; 114) of the device.

8. Device according to one of the Claims 2 to 7
wherein the device includes two translational acceleration sensors and one rotation-angle acceleration sensor.

9. Device according to one of the Claims 2 to 8
wherein the device includes one mechanical or one optical sensor and, furthermore, one rotation-angle acceleration sensor.

10. Device according to one of the preceding claims
wherein the device includes operating means (34, 36; 134, 136) by means of which the graphical representation of the position data of the reference point (14; 114) on the display facility (12; 112) is initiated and wherein the device furthermore includes operating means (34, 36; 134, 136) by means of which the graphical representation of the position data of the reference point (14; 114) on the display facility (12; 112) is terminated.

11. Device according to one of the preceding claims
wherein the device includes means for verifying contact with the surface of a solid object and wherein, furthermore, the data processing means graphically display the position data of the reference point (14; 114) determined when there is contact with the surface (150) of a solid object on the display facility (12; 112).

12. Device according to one of the preceding claims
wherein the data processing means take account of a change in the present position of the reference point (14; 114) in such a way that the image (20, 22; 120, 122) shown on the display facility (12; 112) is substantially stable in terms of location and/or position relative to a fixed reference area.

13. Device according to Claim 12
wherein the reference area is a plane running substantially parallel to the surface of the display facility (12; 112).

14. Device according to Claim 12
wherein the reference area is substantially parallel to the surface (150) of a solid object.

15. Device according to one of the preceding claims
wherein in order to obtain the stability of the image shown on the display facility (12; 112) in terms of location and/or position relative to the reference area the data processing means move the displayed image within the display facility (12; 112) with a complementary movement opposite that of a change in the present position of the reference point (14; 114).

16. Device according to one of the preceding claims
wherein the device includes operating means (32; 132) by means of which the size relationship between the detected position data and the image (20, 22; 120, 122) of the position data represented on the display facility (12; 112) is adjustable.

17. Device according to one of the preceding claims
wherein the data processing means include a microprocessor.

18. Device according to one of the preceding claims
embodied for cable-linked or cableless communication with a remotely located base.

19. Device according to Claim 18,
having radio transmission means, in particular for transmitting the detected movement or/and the detected characters.

20. Device according to one of the preceding claims
embodied as a mobile telecommunication terminal.

21. Use of a device according to one of the preceding claims for controlling a graphical user interface displayed on the display facility (12, 112), whereby the graphical user interface is operated by moving the device.

22. Method according to Claim 21
wherein the graphical user interface includes the representation of a keyboard

23. Method according to Claim 22
wherein the keyboard includes a telephone keypad.

24. Method according to Claim 23
wherein the graphical user interface facilitates controlling an arrangement wherein, furthermore, objects can be processed by means of said arrangement in the form of actions and contents, said actions being executable and said contents being capable of being processed by means of said actions,
- wherein said objects are spatially arranged within an operating space, and
- wherein said objects are accepted into a string, for which purpose their respective position in the operating space is located.

## Revendications

1. Dispositif de détection et de représentation de déplacements, qui comprend :
- un boîtier (10; 110),
- des moyens (172, 174) de détection de position installés sur le boîtier, pour détecter les données actuelles de position d'un point de référence (14; 114) du dispositif,
- des moyens de traitement de données pour traiter les données de position détectées par les moyens (172, 174) de détection de position et
- un dispositif d'affichage (12; 112) prévu sur le boîtier (10; 110) pour présenter une image (20, 22; 120, 122) des données de position détectées et traitées,
**caractérisé en ce que**
les moyens de traitement de données sont configurés avec un dispositif de reconnaissance de caractères qui examinent la modification, détectée par les moyens (172, 174) de détection de position, de la position actuelle du point de référence (14; 114) pour vérifier s'ils correspondent à un caractère prédéterminé, et en cas de correspondance essentielle, l'associent à au moins un caractère.

2. Dispositif selon la revendication 1, dans lequel les moyens (172, 174) de détection de position sont équipés d'au moins un détecteur optique et/ou d'au moins un détecteur mécanique (172, 174) et/ou d'au moins un détecteur d'accélération et/ou d'une combinaison de ces détecteurs.

3. Dispositif selon la revendication 2, dans lequel l'au moins un détecteur optique est réalisé sous la forme d'un détecteur optique de déplacement pour la détection d'un déplacement de translation du point de référence (14; 114).

4. Dispositif selon les revendications 2 ou 3, dans lequel l'au moins un détecteur optique est réalisé pour détecter un déplacement de rotation autour d'un axe qui passe par le point de référence (14; 114).

5. Dispositif selon l'une des revendications 2 à 4, qui comporte deux détecteurs optiques.

6. Dispositif selon l'une des revendications 2 à 5, dans lequel l'au moins un détecteur mécanique est configuré comme détecteur de roulement (172, 174) pour la détection d'un déplacement de roulement sur une surface (150).

7. Dispositif selon l'une des revendications 2 à 6, dans lequel l'au moins un détecteur d'accélération est configuré comme détecteur d'accélération de l'angle de rotation ou comme détecteur d'accélération longitudinale pour détecter une accélération du point de référence (14; 114) du dispositif.

8. Dispositif selon l'une des revendications 2 à 7, dans lequel le dispositif comprend deux détecteurs d'accélération de translation et un détecteur d'accélération de l'angle de rotation.

9. Dispositif selon l'une des revendications 2 à 8, dans lequel le dispositif comprend un détecteur mécanique ou un détecteur optique et en outre un détecteur d'accélération de l'angle de rotation.

10. Dispositif selon l'une des revendications précédentes, dans lequel le dispositif comprend des moyens d'actionnement (34, 36; 134, 136) qui permettent de lancer la représentation graphique des données de position du point de référence (14; 114) sur le dispositif d'affichage (12; 112), le dispositif comprenant en outre des moyens d'actionnement (34, 36; 134, 136) qui permettent de terminer la représentation graphique des données de position du point de référence (14; 114) sur le dispositif d'affichage (12; 112).

11. Dispositif selon l'une des revendications précédentes, dans lequel le dispositif comprend des moyens de preuve du contact avec la surface d'un objet fixe, et dans lequel les moyens de traitement de données représentent graphiquement sur le dispositif d'affichage (12; 112) les données de position du point de référence (14; 114) déterminées lorsqu'il y a contact avec la surface (150) d'un objet fixe.

12. Dispositif selon l'une des revendications précédentes, dans lequel les moyens de traitement de données tiennent compte d'une modification de la position actuelle du point de référence (14; 114) de telle sorte que l'image (20, 22; 120, 122) représentée sur le dispositif d'affichage (12; 112) reste essentiellement immobile et/ou en position stable par rapport à une surface de référence fixe.

13. Dispositif selon la revendication 12, dans lequel la surface de référence est un plan essentiellement parallèle à la surface du dispositif d'affichage (12; 112).

14. Dispositif selon la revendication 12, dans lequel la surface de référence s'étend essentiellement en parallèle à la surface (150) d'un objet fixe.

15. Dispositif selon l'une des revendications précédentes, dans lequel, pour obtenir l'immobilité et la stabilité de position de l'image représentée sur le dispositif d'affichage (12; 112) par rapport à la surface de référence, les moyens de traitement de données déplacent l'image représentée à l'intérieur du dispositif d'affichage (12; 112) dans un déplacement complémentaire opposé à la modification de la position actuelle du point de référence (14; 114).

16. Dispositif selon l'une des revendications précédentes, dans lequel le dispositif comprend des moyens d'actionnement (32; 132) qui permettent de régler le rapport de taille entre les données de position détectées et l'image (20, 22; 120, 122) des données de position représentées sur le dispositif d'affichage (12; 112).

17. Dispositif selon l'une des revendications précédentes, dans lequel les moyens de traitement de données comprennent un microprocesseur.

18. Dispositif selon l'une des revendications précédentes, qui est configuré pour permettre une communication par câble ou sans fil avec une base située à distance.

19. Dispositif selon la revendication 18, qui présente des moyens de transmission radio, en particulier pour transmettre le déplacement détecté et/ou les caractères déterminés.

20. Dispositif selon l'une des revendications précédentes, configuré comme terminal de télécommunication mobile.

21. Utilisation d'un dispositif selon l'une des revendications précédentes, pour commander une surface graphique d'utilisateur représentée sur un dispositif d'affichage (12; 112), la surface graphique d'utilisateur étant commandée par un déplacement du dispositif.

22. Procédé selon la revendication 21, dans lequel la surface graphique d'utilisateur comprend la représentation d'un clavier.

23. Dispositif selon la revendication 22, dans lequel le clavier comprend un clavier de téléphone.

24. Dispositif selon l'une des revendications 22 à 23, dans lequel la surface graphique d'utilisateur permet de commander un agencement, des objets sous forme d'actions et de contenus pouvant en outre être traités par l'agencement, en permettant d'exécuter des actions et de traiter les contenus par les actions,
- dans lequel les objets sont disposés spatialement dans un espace de commande et
- dans lequel les objets sont enregistrés en succession, suite à quoi leur position dans l'espace de commande est examinée.
